# EUROPÄISCHE PATENTSCHRIFT

(11) **EP 0 845 384 B1**
(45) Veröffentlichungstag und Bekanntmachung des Hinweises auf die Patenterteilung: **16.01.2002**
(21) Anmeldenummer: 97118496.5
(22) Anmeldetag: 24.10.1997
(51) Int. Cl.: B60N 2/08

(54) **Verriegelungsvorrichtung an Längsverstelleinrichtungen für Sitze, insbesondere Kraftfahrzeugsitze**
Locking device for longitudinal adjusting arrangement for seats, particularly for vehicle seats
Mécanisme de vérrouillage pour le dispositif de déplacement longitudinal de sièges, en particulier de sièges de véhicule automobile

(30) Priorität: 29.11.1996 DE 19649385
(43) Veröffentlichungstag der Anmeldung: 03.06.1998
(73) Patentinhaber: Keiper GmbH & Co., 42855 Remscheid (DE)
(72) Erfinder: Schüler, Rolf, 42579 Heiligenhaus (DE); Flick, Joachim, 42499 Hückeswagen (DE)
(74) Vertreter: Mentzel, Norbert, Dipl.-Phys.

(56) Entgegenhaltungen:
- EP-A- 0 094 141
- WO-A-95/17317
- DE-A- 4 242 895
- PATENT ABSTRACTS OF JAPAN vol. 96, no. 8, 30.August 1996 & JP 08 104159 A (GIFU SHATAI KOGYO KK), 23.April 1996,

## Beschreibung

Die Erfindung betrifft eine Verriegelungsvorrichtung an Längsverstelleinrichtungen für Sitze, insbesondere Kraftfahrzeugsitze, deren Sitzteil über eine Schienenanordnung am Boden abgestützt ist, die bodenseitige Führungsschienen und gegenüber diesen längsverschiebbare sitzseitige Laufschienen umfasst, die gegenüber den Führungsschienen mittels einer in ein Sperrgehäuse integrierten Sperreinrichtung feststellbar sind, die ihrerseits mit wenigstens einem im Sperrsinn durch eine Riegelfeder belasteten, in eine Rastöffnung einer Zahnreihe eingreifenden Sperrzahn ausgestattet ist, wobei der Sperrzahn über einen von einem manuell betätigbaren Bügelhebel beaufschlagten Entriegelungshebel einer Entriegelungsmechanik aus seiner Sperrlage aussteuerbar ist (s. zum Beispiel DE 42 42 895 C1).

Bei Verriegelungsvorrichtungen der eingangs genannten Art ist es bekannt, den manuell betätigbaren Bügelhebel zusammen mit dem Entriegelungshebel in einer derartigen Weise abzufedern, dass die Verriegelungslage zwischen der Laufschiene und der Führungsschiene normalerweise aufrechterhalten wird und nur durch die Handhabung des Bügelhebels im Lösesinne solange aufgehoben ist, solange der Bügelhebel in seiner Löselage gehalten wird. Sobald der Sitzbenutzer den Bügelhebel loslässt, wird dieser durch seine Abfederung rückgestellt, so dass die den Sperrzahn belastende Riegelfeder. diesen wieder in die Verriegelungslage von Laufschiene gegenüber der Führungsschiene zurückdrückt. Der Entriegelungsprozess erfolgt erst am Hubende des Bügelhebels vollständig, wobei die Bedienungsperson einen stetigen Kraftanstieg spürt, und während der Betätigung kaum in der Lage ist zu beurteilen, wann die Aussteuerung des Sperrzahnes aus der Rastöffnung erfolgt ist, wobei die Bedienungsperson häufig zu früh den Eindruck hat, dass die Entriegelung bereits erfolgt ist, so dass der Hub am Bügelhebel beendet wird und der Riegel während der Verschiebung des Sitzteiles über die Rastöffnungen der Zahnreihe rattert. Bei einer Lösung zur quasi stufenlosen Sitzlängsverstellung wie sie beispielsweise aus der WO 95/17 317 ersichtlich ist sind mehrere nebeneinander angeordnete Sperrzähne wirksam, die jeweils durch eine Riegelfeder belastet sind, weshalb beim Entriegelungsprozess ein höherer Kraftbedarf für die Gesamtentriegelung anfällt.

Aufgabe der Erfindung ist es, eine Verriegelungsvorrichtung der eingangs genannten Art dahingehend zu verbessern, dass bei Einleitung des Riegelvorganges sofort ein höherer Kraftanstieg bemerkbar ist, der nach Austritt des Sperrzahnes aus der Rastöffnung deutlich abfällt und der Bedienungsperson dadurch die vollständige Entriegelung anzeigt, so dass eine ratterfreie Verschiebung des Sitzteiles gegenüber der Führungsschiene möglich ist. Diese Aufgabe ist erfindungsgemäß durch die im Anspruch 1 angegebenen Merkmale gelöst. Dabei ist zwischen einem dem Sperrgehäuse ortsfest zugeordneten Bauteil und dem Entriegelungshebel ein Federglied geschaltet, deren eines Federende über dem Schwenkpunkt des Entriegelungshebels am Widerlager des Sperrgehäuses abgestützt ist, während das andere Federende an einer aus der Totpunktlage in eine den Sperrzahn in Riegellage belassende Übertotpunktlage schwenkbaren Stütznase am Entriegelungshebel gehaltert ist. Dadurch ist eine Änderung des Kraftverlaufes während der Lösebetätigung realisierbar, da vor dem Hubende immer ein Kraftabfall auftritt und die totale Entriegelung dynamisch unterstützt ist. Die Bedienungsperson bemerkt den Kraftabfall am Hubende, wodurch hier der Eindruck vermittelt wird, dass der Sperrzahn die Rastöffnung verlassen hat und die Verschiebung des Sitzteiles beginnen kann. Dabei ist in der Tat der Sperrzahn dann soweit aus der Rastöffnung ausgetreten, dass bei der Verschiebebewegung ein Rattern des Sperrzahnes über die Rastöffnungen der Zahnreihe nicht erfolgt. Die vorgenannte Lösung ist auch im Hinblick auf Kosten, Bauraum und Gewicht als günstig anzusehen.

Obschon es denkbar ist, als Federglied verschiedene Arten von Federn einzusetzen, so ist es in Bezug auf die Federcharakteristik und auch auf den Platzbedarf vorteilhaft eine Bügelfeder als Federglied zu verwenden, die aus einer Lamelle omegaförmig gestaltet und an ihren Schenkelenden rinnenförmig ausgebildet ist, wovon das eine Schenkelende am Widerlager des dem Sperrgehäuse zugeordneten Bauteiles und das andere Schenkelende an einer Stütznase des Entriegelungshebels angreift. Dabei ist es vorteilhaft, das Widerlager des dem Sperrgehäuse zugeordneten Bauteiles als vom an der Laufschiene festgelegten Bauteil abgewinkelt aufragende Brückenlasche auszubilden. Die am Entriegelungshebel befindliche Stütznase ist vorteilhaft als über dem Schwenkpunkt des Entriegelungshebels aus diesem aufragende Zunge ausgebogen.

Eine kompakte Bauweise der Verriegelungsvorrichtung lässt sich erzielen, indem das Bauteil als eine die Laufschienen übergreifende und an dieser festgelegte Platte ausgebildet ist, die mit der Laufschiene und dem Sperrgehäuse fest verbunden ist und die einerseits zur Sitzinnenseite weisende Stützlagerschalen für den Entriegelungshebel und andererseits die darüber angeordnete, das Widerlager bildende Brückenlasche aufweist.

Die Erfindung ist in einem Ausführungsbeispiel auf der Zeichnung dargestellt und wird nachfolgend näher erläutert. Es zeigen:
- Fig. 1: eine auf einer Sitzlängsseite befindliche Schienenanordnung eines die Längsverstelleinrichtung mit ihrer Verriegelungsvorrichtung umfassenden Fahrzeugsitzes in einer Seitenansicht von der Sitzinnenseite her gesehen,
- Fig. 2: die aus Fig. 1 ersichtliche Schienenanordnung mit der Längsverstelleinrichtung in einer Draufsicht,
- Fig. 3: einen Querschnitt der Schienenanordnung mit der Verriegelungsvorrichtung nach der Linie III - III von Fig. 2 bei der die Laufschiene gegenüber der Führungsschiene gesperrt ist,
- Fig. 4: den aus Fig. 3 ersichtlichen Querschnitt der Schienenanordnung bei der jedoch die Sperrung zwischen der Laufschiene und der Führungsschiene aufgehoben ist.

Die Unterseite eines nicht dargestellten Sitzrahmens ist auf beiden Sitzlängsseiten mit einer Laufschiene 10 verbunden, die in jeweils eine am Fahrzeugboden festgelegte Führungsschiene 11 eingreift und an dieser bei dem dargestellten Ausführungsbeispiel über Wälzkörper 12 und 13 längsverschiebbar abgestützt ist. Die Führungsschiene 11 weist an ihrem aufgewölbten Boden in Längsrichtung hintereinander abstandsweise angeordnete Rastöffnungen 14 auf, welche eine Zahnreihe bilden. Im Sperrfall greift in wenigstens eine Rastöffnung 14 wenigstens einer von gegebenenfalls mehrerer Sperrzähnen 16 ein, die durch einen am mit der Laufschiene 10 verbundenen Sperrgehäuse 17 gelagerten Entriegelungshebel 20 gegen die Wirkung einer die Sperrzähne 16 beaufschlagenden Riegelfeder 18 lösbar sind, indem der an Stützlagerschalen 19 einer mit dem Sperrgehäuse 17 verbundenen Platte 26 gelagerte Entriegelungshebel 20 betätigt wird, um den Sitz in Fahrzeuglängsrichtung verschieben zu können.

Der als Querhebel ausgebildete Entriegelungshebel 20 weist an beiden Längsseiten einander gegenüberliegend abgebogene Stützfinger 21 auf, die sich in den Stützlagerschalen 19 abstützen und dort einen Schwenkpunkt 22 bilden. Der Entriegelungshebel 20 greift mit seinem einen Arm entgegen der Kraft der Riegelfeder 18 an einem Vorsprung 23 des Sperrzahnes 16 an und untergreift mit seinem anderen Ende einen Bügelhebel 24.

Dieser Bügelhebel 24 ist in seinem hinteren Bereich mit einem Querrohr 25 fest verbunden, das auf beiden Sitzlängsseiten in einem Lagerauge 27 einer Platte 26 gelagert ist. Diese Platte 26 ist an ihren Längsseiten mit einer zur Sitzinnenseite hinweisenden Unterbrechung winkelförmig abgebogen, übergreift die Laufschiene 10 und ist gleichzeitig mit dieser und dem Sperrgehäuse 17 verbunden, von welchem wenigstens ein zur Sperreinrichtung gehörender Sperrzahn 16 aufgenommen ist. Der Bügelhebel 24 ist soweit zur Vorderseite des Sitzes hin geführt, dass dieser vom Sitzbenutzer zur Sitzlängslagenverstellung hochgezogen werden kann.

Oberhalb des Schwenkpunktes 22 in der Stützlagerschale 19 befindet sich eine nach oben aus der Platte 26 abgewinkelte Brückenlasche 28, die an der Oberseite ihres Ausschnitts ein Widerlager 29 für ein noch zu beschreibendes Federglied 30 bildet.

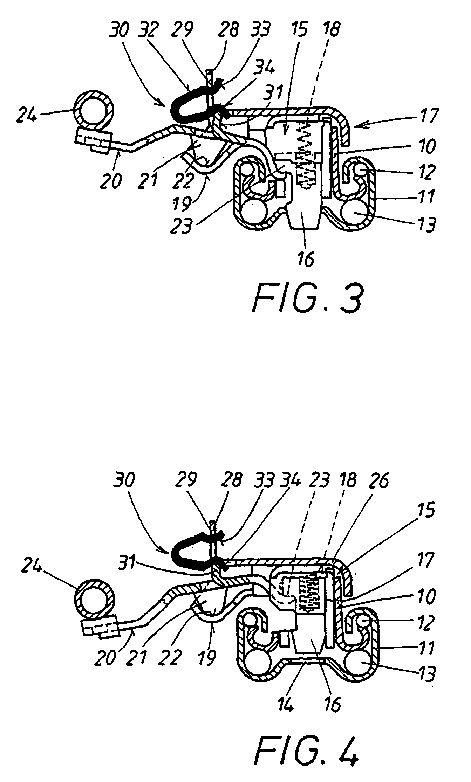

Unterhalb der für die Schwenkbewegung des Entriegelungshebels 20 freigeschnittenen Brückenlasche 28 befindet sich am Entriegelungshebel 20 eine nach oben aufragende Stütznase 31, die derart angeordnet ist, dass sie bei Verschwenkung des Entriegelungshebels 20 in eine der Freigabestellung des Sperrzahnes 16 entsprechende Lage, etwa in der durch den Schwenkpunkt 22 und das Widerlager 29 gebildeten Ebene, plaziert ist (Fig. 4).

Bei dem dargestellten Ausführungsbeispiel ist als Federglied 30 eine Bügelfeder 32 eingesetzt, die aus einer omegaförmig gestalteten Lamelle gebildet ist und deren die Schenkelenden 33 und 34 bildenden Federenden rinnenförmig gestaltet sind. Diese Bügelfeder 32 ist derart zwischen die Brückenlasche 28 und den Entriegelungshebel 20 gespannt, dass das eine Federende 33 am Widerlager 29 und das andere Federende 34 an der Stütznase 31 abgestützt ist.

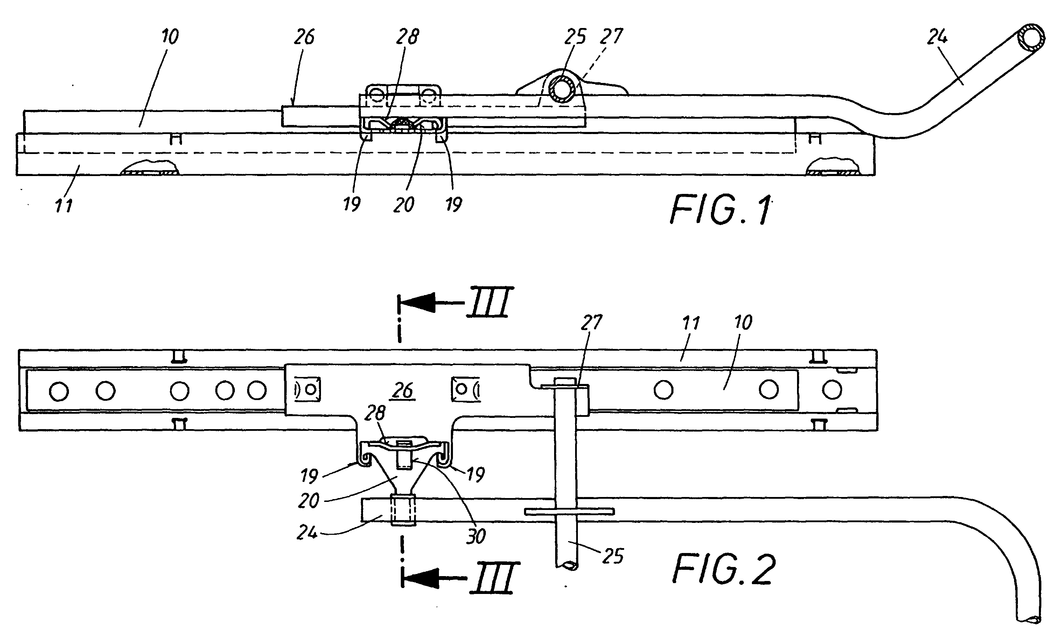

Ausgehend von der aus Fig. 3 ersichtlichen Sperrlage, bei der sich das Federende 34 in einer über die durch den Schwenkpunkt 22 und das Widerlager 29 gebildeten Ebene hinausgehenden Übertotpunktlage befindet, wodurch der Entriegelungshebel 20 in der aus Fig. 3 ersichtlichen Lage verbleibt, ist zur Längslagenverstellung der Bügelhebel 24 in seinem vorderen Bereich anzuheben, so dass er bei der aus Fig. 1 ersichtlichen Darstellung entgegen dem Uhrzeigersinn nach oben verschwenkt, wodurch die hinteren Enden des Bügelhebels 24 den Entriegelungshebel 20 in der aus den Fig. 3 und 4 ersichtlichen Darstellung entgegen dem Uhrzeigersinn verschwenkt, wodurch der Sperrzahn 16 entgegen der diesen beaufschlagenden Kraft der Riegelfeder 18 in die aus Fig. 4 ersichtliche Position nach oben gezogen wird. Damit ist die Verriegelungslage zwischen der Laufschiene 10 und der Führungsschiene 11 gelöst. Während der Verschwenkbewegung des Entriegelungshebels 20 bewegt sich die Stütznase 31 in die aus Fig. 4 ersichtliche Position etwa in die durch den Schwenkpunkt 22 und das Widerlager 29 gebildete Ebene und ist der Totpunktlage angenähert. Diese Lage des Entriegelungshebels 20 ist jedoch instabil und kann nur solange aufrechterhalten werden, solange der Bügelhebel 24 nach oben gezogen wird. Wenn das Federende 34 in den Bereich der zuvor genannten Ebene gelangt, nimmt die vom Entriegelungshebel 20 auf den Bügelhebel 24 geäußerte Kraft ab, was für die Betätigungsperson dann spürbar wird, wenn die Sperrzähne 16 aus der Rastöffnung 14 vollständig ausgefahren sind.

Wie bereits erwähnt, gibt die dargestellte und vorbeschriebene Ausführungsform den Erfindungsgegenstand nur beispielsweise wieder, der keinesfalls allein darauf beschränkt ist.

### Bezugszeichenliste :

- 10: Laufschiene
- 11: Führungsschiene
- 12: Wälzkörper
- 13: Wälzkörper
- 14: Rastöffnung
- 15: Sperreinrichtung
- 16: Sperrzahn
- 17: Sperrgehäuse
- 18: Riegelfeder
- 19: Stützlagerschale
- 20: Entriegelungshebel
- 21: Stützfinger
- 22: Schwenkpunkt
- 23: Vorsprung
- 24: Bügelhebel
- 25: Querrohr
- 26: Bauteil/Platte
- 27: Lagerauge
- 28: Brückenlasche
- 29: Widerlager
- 30: Federglied
- 31: Stütznase
- 32: Bügelfeder
- 33: Schenkelende/Federende
- 34: Schenkelende/Federende

## Patentansprüche

1. Verriegelungsvorrichtung an Längsverstelleinrichtungen für Sitze, insbesondere Kraftfahrzeugsitze, deren Sitzteil über eine Schienenanordnung am Boden abgestützt ist, die bodenseitige Führungsschienen und gegenüber diesen längsverschiebbare, sitzseitige Laufschienen umfasst, die gegenüber den Führungsschienen mittels einer in ein Sperrgehäuse integrierten Sperreinrichtung feststellbar sind, die ihrerseits mit wenigstens einem im Sperrsinn durch eine Riegelfeder belasteten, in eine Rastöffnung einer Zahnreihe eingreifenden Sperrzahn ausgestattet ist, wobei der Sperrzahn über einen von einem manuell betätigbaren Bügelhebel beaufschlagten Entriegelungshebel einer Entriegelungsmechanik aus seiner Sperrlage aussteuerbar ist,
**dadurch gekennzeichnet ,**
**dass** innerhalb der Entriegelungsmechanik (19, 20, 24, 26) wenigstens ein Federglied (30) angeordnet ist, dessen kinematische Anordnung eine während des Entriegelungsprozesses zunächst steigende, im weiteren Fortgang jedoch wieder abfallende Entriegelungskraft äußert.

2. Verriegelungsvorrichtung nach Anspruch 1, **dadurch gekennzeichnet, dass** zwischen einem dem Sperrgehäuse (17) zugeordneten Bauteil (26) und Entriegelungshebel (20) ein Federglied (30) geschaltet ist, deren eines Federende (33) über dem Schwenkpunkt (22) des Entriegelungshebels (20) am Widerlager des Bauteiles (26) abgestützt ist, während das andere Federende (34) an einer aus der Totpunktlage in eine den Sperrzahn (16) in Riegellage belassende Übertotpunktlage schwenkbaren Stütznase (31) am Entriegelungshebel (20) gehaltert ist.

3. Verriegelungsvorrichtung nach Anspruch 2, **dadurch gekennzeichnet, dass** als Federglied eine Bügelfeder (32) Verwendung findet, die aus einer Lamelle omegaförmig gestaltet ist und an ihren Schenkelenden (33, 34) rinnenförmig ausgebildet ist, wovon das eine Federende (33) am Widerlager (29) des Sperrgehäuses (17) und das andere Federende (34) an der Stütznase (31) des Entriegelungshebels (20) angreift.

4. Verriegelungsvorrichtung nach Anspruch 2 oder 3, **dadurch gekennzeichnet, dass** das Widerlager (29) als vom an der Laufschiene (10) festgelegten Bauteil (26) abgewinkelt aufragende Brückenlasche (28) ausgebildet ist.

5. Verriegelungsvorrichtung nach einem der vorhergehenden Ansprüche, **dadurch gekennzeichnet, dass** die Stütznase (31) als über dem Schwenkpunkt (22) des Entriegelungshebels (20) aus diesem aufragende Zunge ausgebogen ist.

6. Verriegelungsvorrichtung nach einem der vorhergehenden Ansprüche, **dadurch gekennzeichnet, dass** das Bauteil als eine die Laufschiene (10) übergreifende und an dieser festgelegte Platte (26) ausgebildet ist, die mit Laufschiene (10) und Sperrgehäuse (17) fest verbunden ist und einerseits zur Sitzinnenseite weisende Stützlagerschalen (19) für den Entriegelungshebel (20) und andererseits die darüber angeordnete, das Widerlager (29) bildende Brückenlasche (28) aufweist.

## Claims

1. Locking device for longitudinally adjusting arrangements for seats, particularly for vehicle seats, whose seat part is supported on the floor by means of a rail arrangement which comprises guide rails on the floor and, opposite these, longitudinally adjusting running rails on the seat, said running rails being lockable vis-à-vis the guide rails by means of a locking device integrated into a lock casing, said locking device in turn being fitted with at least one locking tooth engaging with a catch opening of a tooth row and loaded in the locking direction by a lock spring, whereby the locking tooth can be moved from its locking position by means of an unlocking lever, loaded by a manually activated stirrup lever, of an unlocking mechanism,
**characterised in that**
the unlocking mechanism (19, 20, 24, 26) accommodates at least one spring element (30) whose kinematic arrangement exerts an initially increasing unlocking force during the unlocking process but, in further operation, a decreasing unlocking force again.

2. Locking device according to claim 1, **characterised in that** a spring element (30) is located between a component (26), assigned to the lock casing (17), and an unlocking lever (20), the one spring end (33) of said element being supported by the pivot point (22) of the unlocking lever (20) on the abutment of the component (26) whereas the other spring end (34) is secured on a support nose (31) on the unlocking lever (20), said nose swivelling out of the dead-centre position into an over-dead-centre position, leaving the locking tooth (16) in the locked position.

3. Locking device according to claim 2, **characterised in that** a stirrup spring (32) is used as the spring element, which is made of an omega-shaped plate and whose leg ends (33, 34) are designed in the shape of grooves, of which the one spring end (33) acts on the abutment (29) of the lock casing (17) and the other spring end (34) acts on the support nose of (31) of the unlocking lever (20).

4. Locking device according to claim 2 or 3, **characterised in that** the abutment (29) is designed as a bridge lug (28) which projects at an angle from the component (26) secured on the running rail (10).

5. Locking device according to one of the preceding claims, **characterised in that** the support nose (31) is bent out as a tongue projecting out of the unlocking lever (20) over the pivot point (22) of said lever.

6. Locking device according to one of the preceding claims, **characterised in that** the component is designed as a plate (26) reaching over the running rail (10) and fixed to it, said plate being firmly joined to the running rail (10) and the lock casing (17) and which, on the one hand, has support bearing shells (19) facing towards the interior of the seat for the unlocking lever (20) and, on the other hand, the bridge lug (28) arranged above it forming the abutment (29).

## Revendications

1. Mécanisme de verrouillage pour les dispositifs de déplacement longitudinal de sièges, en particulier de sièges de véhicule automobile, dont la partie siège repose sur le sol via un ensemble de rails qui comprend les rails de guidage côté sol et des rails côté siège déplaçables longitudinalement par rapport aux rails de guidage, les rails côté siège étant verrouillables par rapport aux rails de guidage au moyen d'un dispositif de verrouillage intégré dans un boîtier de verrouillage, le dispositif de verrouillage étant équipé de son côté d'au moins une dent de verrouillage soumise à la contrainte d'un ressort dans le sens du verrouillage, dent qui encrante dans l'orifice d'une rangée de dents, sachant que la dent de verrouillage peut quitter sa position de verrouillage par le biais d'un mécanisme de déverrouillage dont le levier de déverrouillage s'actionne manuellement un levier-étrier,
**caractérisé en ce que**
à l'intérieur du mécanisme de déverrouillage (19, 20, 24, 26) figure au moins un organe ressort (30) dont l'agencement cinématique engendre, pendant le processus de déverrouillage, une force de déverrouillage croissante dans un premier temps puis décroissante pendant que se poursuit le déverrouillage.

2. Mécanisme de verrouillage selon revendication 1, **caractérisé en ce qu'**entre un composant (26) affecté au boîtier de verrouillage (17) et le levier de déverrouillage (20) est intercalé un organe ressort (30) dont une extrémité (33) s'appuie contre le palier antagoniste du composant (26) au-dessus du point de basculement (22) du levier de déverrouillage (20), tandis que l'autre extrémité du ressort (34) est fixée contre une saillie d'appui basculante (31) située contre le levier de déverrouillage (20), cette saillie basculant du point mort vers un point situé au-delà du point mort laissant la dent de verrouillage (16) en position verrouillée.

3. Mécanisme de verrouillage selon la revendication 2, **caractérisé en ce que** l'organe ressort utilisé est un ressort étrier (32) dont la lamelle est configurée en oméga et dont les extrémités (33, 34) des branches forment une rigole par laquelle une extrémité (33) du ressort engrène dans le palier antagoniste (29) du boîtier de verrouillage (17) et l'autre extrémité (34) engrène dans la saillie d'appui (31) du levier de déverrouillage (20).

4. Mécanisme de verrouillage selon la revendication 2 ou 3, **caractérisé en ce que** le palier antagoniste (29) est configuré en patte de pontage (28) saillant, coudée, du composant (26) fixé contre le rail mobile (10).

5. Mécanisme de verrouillage selon l'une des revendications précédentes, **caractérisé en ce que** la saillie d'appui (31) est coudée en languette saillant hors du levier de déverrouillage (20), au-dessus du point de basculement (22) dudit levier.

6. Mécanisme de verrouillage selon l'une des revendications précédentes, **caractérisé en ce que** le composant se présente en forme de plaque (26) recouvrant le rail mobile (10) et fixée contre celui-ci, cette plaque étant fermement fixée contre le rail mobile (10) et le boîtier de verrouillage (17) et présentant d'une part, pour le levier de déverrouillage (20), des coquilles pour paliers d'appui (19) regardant vers le côté intérieur du siège, et d'autre part la patte de pontage (28) située au-dessus et formant le palier antagoniste (29).
